(19) **Europäisches Patentamt**

**European Patent Office**

**Office européen des brevets**

(11) Veröffentlichungsnummer: **0 216 048 B1**

## (12) EUROPÄISCHE PATENTSCHRIFT

(45) Veröffentlichungstag der Patentschrift: **11.11.92**

(21) Anmeldenummer: **86109776.4**

(22) Anmeldetag: **16.07.86**

(51) Int. Cl.⁵: **H02J 3/36**

Die Akte enthält technische Angaben, die nach dem Eingang der Anmeldung eingereicht wurden und die nicht in dieser Patentschrift enthalten sind.

(54) **Regelverfahren für eine zwei Drehstromnetze verbindende Hochspannungsgleichstromübertragung.**

(30) Priorität: **26.08.85 DE 3530422**

(43) Veröffentlichungstag der Anmeldung:
**01.04.87 Patentblatt 87/14**

(45) Bekanntmachung des Hinweises auf die Patenterteilung:
**11.11.92 Patentblatt 92/46**

(84) Benannte Vertragsstaaten:
**AT DE FR GB IT SE**

(56) Entgegenhaltungen:
**EP-A- 0 067 978**
**DE-A- 2 901 263**
**US-A- 4 264 951**
**US-A- 4 330 815**

**REVUE GENERALE DE L'ELECTRICITE vol. 42, no. 4, April 1958, PARIS FR Seite 203 - 209; S. BOICHIDZE: "Sur le réglage automatique d'une liaison à courant continu entre réseaux à courant alternatif"**

(73) Patentinhaber: **SIEMENS AKTIENGESELL-SCHAFT**
**Wittelsbacherplatz 2**
**W-8000 München 2(DE)**

(72) Erfinder: **Schraudolph, Manfred, Dipl.-Ing.**
**Marienbader Strasse 50**
**W-8520 Erlangen(DE)**
Erfinder: **Storner, Christa**
**Lindenweg 22**
**W-8521 Grossenseebach(DE)**

**Beschreibung**

Die Erfindung betrifft ein Regelverfahren für eine zwei Drehstromnetze verbindende HGÜ nach dem Oberbegriff des Patentanspruchs 1.

Ein derartiges Regelverfahren ist aus der EP-A-0 067 978 bekannt, bei dem die Netzblindleistung beeinflussende Steuerwinkel, das Transformatorübersetzungsverhältnis und Kompensationsmittel in Abhängigkeit vom Einhalten eines gegen Null gehenden Differentialquotienten aus Blindleistung und Gleichstrom verändert bzw. geschaltet werden. Dieses Regelverfahren ist daraufhin ausgelegt, die HGÜ mit minimalem Blindleistungsbedarf zu betreiben.

Bei bekannten Regelverfahren für eine HGÜ wird eine Regelung der Wirkleistung der HGÜ vorgenommen und die Blindleistung an den Blindleistungsbedarf des jeweiligen Drehstromnetzes mit Hilfe von schaltbaren Drosseln oder Kondensatoren, statischen Kompensatoren (z.B. thyristorgesteuerte Drosseln oder Kondensatoren) und/oder antriebslosen rotierenden Synchronmaschinen angepaßt. Für die besagten steuerbaren Kompensationseinrichtungen ist für eine notwendige feinstufige oder stufenlose Spannungsanpassung an die zu übertragende Wirkleistung ein erheblicher Aufwand erforderlich. Außerdem ist ein Schalten des dem jeweiligen Umrichter zugeordneten Transformator-Stufenschalters der HGÜ in die falsche Richtung möglich, ehe die Regelanordnung feststellen kann, daß Kompensationseinrichtungen geschaltet werden müssen, so daß der Stufenschalter nach dem von ihm unabhängig erfolgten Schalten der betreffenden Kompensationseinrichtung wieder in Richtung seiner Ausgangsstellung zurückgeschaltet werden muß, wobei sogar ein Schalten über seine Ausgangsposition notwendig werden kann. Der Regelvorgang mit nacheinander ablaufenden Schaltbetätigungen der betreffenden Stufenschalter erlaubt nur eine langsame Regelung, wobei während der relativ lang dauernden Schaltvorgänge die geforderte Wirk- und Blindleistung nicht eingehalten werden kann.

Überdies wird der betreffende Stufenschalter durch das Hin- und Herschalten unnötig beansprucht.

Um die Regelzeit nicht weiter zu verlängern, wird vielfach nur die mit dem schwächeren Drehstromnetz verbundene Seite der HGÜ im Sinne einer Einhaltung der vorgegebenen Bedingungen dieses Netzes geregelt und die dem stärkeren Drehstromnetz zugeordnete andere Seite der HGÜ wird blindleistungsmäßig nur über die schaltbaren Kompensationsmittel an den Bedarf angenähert, so daß im zweiten Drehstromnetz die dort geforderte Blindleistung nicht eingehalten werden kann, was beim ebenfalls relativ schwachen zweiten Drehstromnetz zu Ausfällen führen kann. Weiterhin kann dieses Verfahren ein Regeln in unerwünschte Grenzbereiche nicht erkennen, so daß bei Änderungen in der Soll-Leistung oder bei Spannungsänderungen in den Netzen keine ausreichende Regelreserve vorhanden ist. Eine bei zwei schwachen Netzen erforderliche gleiche langsame Regelung auch auf der Seite des zweiten Drehstromnetzes ergibt eine weitere Verlangsamung der Regelung.

Der Erfindung liegt die Aufgabe zugrunde, eine wesentlich schnellere Regelung für beide Seiten der HGÜ zu schaffen und einen Betriebspunkt zu ermitteln, der für beide Drehstromnetze die vorgegebenen Netzbedingungen einzuhalten ermöglicht und der bei änderungsbedingten dynamischen Vorgängen die schnelle Ermittlung eines neuen Betriebspunktes gestattet, der auf beiden Seiten der HGÜ die kleinstmöglichen Abweichungen von den jeweiligen Sollwerten von Netzspannung und Blindleistung des Netzes ergibt, wobei neben festen Kompensationsmitteln schaltbare einfache L bzw. C- Kompensationsmittel genügen.

Die Lösung der gestellten Aufgabe gelingt durch die kennzeichnenden Merkmale des Anspruches 1.

Das Regelverfahren nach der Erfindung geht von den vom Netzbetreiber anzugebenden Blindleistungsbedarf in beiden Drehstromnetzen in Abhängigkeit von der jeweils geforderten Netzspannung sowie von der geforderten Übertragungsleistung der HGÜ aus, wobei bei der Inbetriebnahme der HGÜ diese Werte den tatsächlichen Netzverhältnissen angepaßt werden. Aus dem zulässigen Spannungsbereich und den vorgesehenen festen und schaltbaren Kompensationsmitteln sowie den Transformatorschaltstufen und dem spannungsabhängigen Blindleistungsbedarf jedes Drehstromnetzes ergibt sich ein Bereich in einem Blindleistungs- Wirkleistungs-Diagramm für die Umrichter, innerhalb dessen bei stationärem Betrieb Betriebspunkte ermittelt werden, die alle Netzbedingungen erfüllen. Das Zu- oder Abschalten von kapazitiven oder induktiven Kompensationsmitteln erfolgt bei Über- bzw. Unterschreiten des besagten Bereiches. Bei dynamischen Vorgängen darf der Betriebspunkt auch außerhalb des genannten Bereiches liegen.

Zur Stützung eines Drehstromnetzes kann der für die diesem Drehstromnetz zugeordnete Seite der HGÜ ermittelte Gleichstrom als Übertragungsstrom eingestellt werden. Die Blindleistung des anderen Drehstromnetzes weicht dann entsprechend mehr vom Sollwert ab.

Bei ausreichend bemessenen Kompensationsmitteln wird durch Schalten von Kondensatoren oder Drosseln die Blindleistung eines oder beider Umrichter im Sinne einer Annäherung verändert, damit bei der Festlegung der Betriebsdaten für die beiden Umrichter die Stellung der ihnen zugeordneten Transformatorstufenschalter eine möglichst geringe Differenz aufweist. Schließlich werden mit den vorgegebenen Netzdaten und den Betriebsdaten die Schaltstufen für jeden Umrichter sowie die Gleichströme der Umrichter ermittelt und aus diesen vorzugsweise der kleinstmögliche gemeinsame Gleichstrom bestimmt, der zur Einhaltung aller Bedingungen beider Netze ausreicht.

Nach Grobeinstellung durch die Kompensationsmittel wird vorteilhafterweise der optimale Betriebspunkt durch Ansteuern der nach den erfindungsgemäßen Verfahren bestimmten Stufenschalterkombination ermittelt, so daß eine Feinabstimmung durch einen statischen Kompensator oder eine Blindleistungsmaschine überflüssig ist.

Das Verfahren der Erfindung ermöglicht:

a) ein gezieltes Ansteuern eines eindeutigen Betriebspunktes, der alle Netzbedingungen erfüllt,

b) die Angabe von fehlenden oder von nicht benötigten Kompensationsmitteln bei baulichen Veränderungen der Drehstromnetze mit Änderungen deren Blindleistungsbedarfs,

c) die Ermittlung eines anderen günstigen Betriebspunktes bei Ausfall oder Abschalten zu Wartungszwecken von Kompensations mitteln sowie

d) das Einstellen des günstigsten Betriebspunktes während auftretender Leistungs- oder Spannungsänderungen (dynamische Vorgänge) in der Zeitspanne, in der noch kein Kompensationsmittel und kein Stufenschalter schalten kann.

Weitere Einzelheiten sind anhand eines Rechenbeispiels für eine nach den Regelverfahren der Erfindung betriebene HGÜ näher erläutert. Es zeigen:

FIG 1      eine schematische Darstellung einer zwei Drehstromnetze verbindenden HGÜ-Kurzkupplung mit festen Filterkreisen und schaltbaren Kompensationsmitteln,

FIG 2      ein Wirk-Blindleistungsdiagramm für die HGÜ mit einem Wertepaarbereich, in dem die HGÜ zur Erfüllung aller Betriebsbedingungen arbeitet und zwar in Abhängigkeit von Steuer- bzw. Löschwinkel und von übertragenem Gleichstrom bei Transformatorstufe 28 und einer Nenn-Netzspannung von 230 kV;

FIG 3      eine Weiterbildung der HGÜ-Verbindung gemäß FIG 1, und

FIG 4      Leistungsdiagramme zur FIG 3.

Die den Drehstromnetzen 1 und 2 zugehörigen Betriebsdaten sind mit entsprechenden Indizes bezeichnet und außerdem mit weiteren Indizes N und n, von denen der Index N auf Netzgrößen hinweist und der Index n Nennwerte bezeichnet.

Es bedeuten in den folgenden Angaben:

$P_n$      = Nennwirkleistung

$P_{soll}$      = Sollwirkleistung

$U_N$      = Netzspannung ($U_{N1}$, $U_{N2}$, $U_{Nn}$)

$u_{Kn}$      = Kurzschlußspannung des betreffenden Stufentransformators

$I_d$      = Umrichtergleichstrom ($I_{d1}$, $I_{d2}$)

$I_{dmin}$      = kleinster Übertragungsgleichstrom der HGÜ, der die Netzbedingungen beider Netze 1 und 2 sowie die Wirk- und Blindleistungsbedingungen in beiden Umrichtern erfüllt.

$Q_N$      = Blindleistungsbedarf des Netzes ($Q_{N1}$, $Q_{N2}$)

$Q_V$      = erforderliche Blindleistung des Umrichters ($Q_{V1}$, $Q_{V2}$)

$$\left.\begin{array}{l} Q_{kap} \\ Q_{ind} \end{array}\right\} = \text{Kompensationsblindleistung}$$

$$\left.\begin{array}{l} C \\ L \end{array}\right\} = \text{Kompensationsmittel schaltbar}$$

$S_{iV}$      = Primärstrom des Stufentransformators

FK      = Filterkreis

ü      = Stufentransformator-Übersetzungsverhältnis

$\alpha$      = Steuerwinkel der Gleichrichterseite

$\gamma$      = Löschwinkel der Wechselrichterseite

EP 0 216 048 B1

$u$ = Überlappungswinkel $u$ = arc cos (cos$\alpha$ - $u_{Kn}$) -$\alpha$

$\epsilon_1 = \frac{1}{2}$ [cos $\alpha$ - cos ($\alpha$ + $u_1$)]; $\epsilon_2 = \frac{1}{2}$ [cos $\gamma$ - cos ($\gamma$ + $u_2$)]

$\rho_1 = \frac{1}{2}$ [cos $\alpha$ + cos ($\alpha$ + $u_1$)]; $\rho_2 = \frac{1}{2}$ [cos $\gamma$ - cos ($\gamma$ + $u_2$)]

$$\chi_1 = \frac{1}{2}\left[\sin\alpha + \sin(\alpha + u_1)\right] + \frac{u_1\frac{\pi}{180} - \sin u_1}{4\,\epsilon_1}$$

$$\chi_2 = \frac{1}{2}\left[(\sin\gamma + \sin(\gamma + u_2)\right] + \frac{u_2\frac{\pi}{180} - \sin u_2}{4\,\epsilon_2}$$

Für das nachstehend gezeigte Beispiel einer Anlage für eine Nennwirkleistung $P_n$ = 200 MW, $P_{soll}$ = 20 MW und einer Netznennspannung $U_{Nn}$ = 230 kV sind die betreiberseitig angegebenen Forderungen für die Netze $N_1$ und $N_2$, nämlich

$Q_{N1}$ = 33 MVAr (kapazitiv)

$Q_{N2}$ = 40 MVAr (kapazitiv)

$$U_{N1} = 241,5 \text{ kV entspricht } \frac{241.5}{230} = 1,05 \text{ per unit}$$

$$U_{N2} = 234.6 \text{ kV entspricht } \frac{234.6}{230} = 1,02 \text{ per unit}$$

Daraus lassen sich in bekannter Weise die notwendigen Kompensationsanordnungen in Form von nichtschaltbaren Filterkreisen FK sowie schaltbaren Kompensationsmittel C und L berechnen mit vorzugsweise für die Filterung von Oberschwingungen bestimmten

$FK_1 \equiv Q_{FK1}$ = 105 MVAr;    zusätzlich ein schaltbarer Kondensator $C_1 \equiv (Q_{kap1})$ = 35 MVAr

$FK_2 \equiv Q_{FK2}$ = 105 MVAr;    zusätzlich ein schaltbarer Kondensator $C_2 \equiv (Q_{kap2})$ = 35 MVAr

Für diese Übertragung wird für Voll- und Teillasten mit den zur Verfügung stehenden Kompensationsmittel (Filterkreise und schaltbare Kompensationsmittel), den Herstellerangaben für die Stufentransformatoren sowie den spannungsabhängigen Blindleistungsanforderungen der Drehstromnetze ein Betriebsbereich zwischen 90 und 155 MVAr ermittelt, der für alle Betriebswünsche einen sicheren Betrieb gewährleistet und der bei dynamischen Vorgängen ausreichende Regelreserven in beiden Richtungen aufweist.

Es ergibt sich folgendes für:

Netz $N_1$:

Blindleistungsbedarf $Q_{N1}$ = 33,0 MVAr (kapazitiv) bei $U_{N1}$ = 241,5 kV;(1,05 p.u.)

Filterkreis $FK_1$ mit $Q_{FK1}$ = 105 . $1,05^2$ = 115,76 MVAr $C_1$ mit $Q_{kap1}$ = 35 . $1,05^2$ = 38,59 MVAr

keine Drosseln erforderlich, d.h. $Q_{ind1}$ = 0

Netz $N_2$

Blindleistungsbedarf $Q_{N2}$ = 40,0 MVAr (kapazitiv bei $U_{N2}$ = 234,6 kV;(1,02 p.u.)

Filterkreis $FK_2$ mit $Q_{FK2}$ = 105 . $1,02^2$ = 109,24 MVAr $C_2$ mit $Q_{kap2}$ = 35 . $1,02^2$ = 36,41 MVAr

Keine Drosseln notwendig, d.h. $Q_{ind2}$ = 0

Daraus ergibt sich:

$Q_{V1}$ = $Q_{FK1}$ + $Q_{N1}$ + $Q_{kap1}$ - $Q_{ind1}$ = 115,76 - 33,0 + 38,59 - 0 = 121,35 MVAr

$Q_{V2}$ = $Q_{FK2}$ + $Q_{N2}$ + $Q_{kap2}$ - $Q_{ind2}$ = 109,24 - 40,0 + 36,41 - 0 = 105,66 MVAr

Die errechneten Umrichterblindleistungen

$Q_{V1}$ = 121,35 MVAr und $Q_{V2}$ = 105,66 MVAr liegen im besagten Betriebsbereich zwischen 90 und 155 MVAr.

Mit den betreiberseitig vorgegebenen Netzbedingungen, den Bereichsgrenzen, der Wirkleistung am jeweils als Wechselrichter arbeitenden Umrichter und den benötigten Kompensationsmitteln für dieses Beispiel kann die Stufenschalterstellung für jeden Umrichter der HGÜ und der Übertragungsstrom $I_{dmin}$ in folgender Weise ermittelt werden aus

$$\text{Leistungsfaktor} \quad \cos\varphi = \cos\left[\arctan\frac{Q_V}{P_{soll}}\right] \quad (1)$$

$\phi$ wird in erster Näherung abhängig von der Energietransportrichtung $\alpha$ bzw. $\gamma$ gleichgesetzt.

$$S_{iV} = \frac{Q_V}{\sqrt{3}\, U_N \, \sin\varphi} \quad (2)$$

$$u = \arccos(\cos\alpha - u_{kn}) - \alpha \quad (3)$$

$$\epsilon = \tfrac{1}{2}[\cos\alpha - \cos(\alpha + u)] \quad (4)$$

$$\rho = \tfrac{1}{2}[\cos\alpha + \cos(\alpha + u)] \quad (5)$$

$$\chi = \frac{1}{2}\left[\sin\alpha + \sin(\alpha + u)\right] + \frac{u\frac{\pi}{180} - \sin u}{4\epsilon} \quad (6)$$

$$I_d = \frac{S_{iV}}{\frac{3}{\pi}\cdot b\sqrt{\frac{2}{3}}\, \ddot{u}\sqrt{\rho^2 + \chi^2}} \quad (7)$$

(mit b = Zahl der in Reihe geschalteten Gleichrichterbrücken)
Bei Einsetzen der konkreten Werte ergibt sich
$\cos\phi_1 = 0,1626$ und damit
$\phi_1 = 80,64°$
$\phi_2 = 79,28°$
$S_{iV1} = 0,2940$ kA und $S_{iV2} = 0,2646$ kA
$u_1 = 9,20°$ und $u_2 = 9,23°$
$\epsilon_1 = 0,08$ und $\epsilon_2 = 0,08$
$\rho_1 = 0,0835$ und $\rho_2 = 0,1060$
$\chi_1 = 0,9954$ und $\chi_2 = 0,9933$
Aus der Beziehung gemäß den Erfindungsgedanken
$I_{d1} = I_{d2}$
läßt sich das Übersetzungsverhältnis

$$\ddot{u}_2 : \ddot{u}_1 = \frac{S_{iV2}}{S_{iV1}} \cdot \sqrt{\frac{\rho_1^2 + \chi_1^2}{\rho_2^2 + \chi_2^2}} \quad (8)$$

zu 0,9 errechnen.

Demnach ist das Übersetzungsverhältnis $\ddot{u}_2$ des dem Netz $N_2$ zugeordneten Tranformatorstufenschalters 0,9mal so groß wie das Übersetzungsverhältnis $\ddot{u}_1$ des dem Netz $N_1$ zugeordneten Transformatorstufenschalters und es sind somit die möglichen Stufenkombinationen festgelegt.

Im Rechenbeispiel sind beide Stufentransformatoren gleich und weisen jeweils 35 Schaltstufen auf. Zur Berechnung des kleinstzulässigen Gleichstromes $I_{dmin}$ ist unterstellt, daß einer der beiden Stufentransformatoren stets auf der für diese Netzspannung höchsten zulässigen Stufe, in diesem Fall der Stufe 35 des Stufentransformators des Netzes N1 steht, da $\ddot{u}_2 < \ddot{u}_1$ ist.

Bei dem dem Netz $N_2$ zugeordneten Stufentransformator wird die den gerechneten Wert $\ddot{u}_2 = \ddot{u}_{1(35)} \cdot 0,9$ am nächsten kommende Stufe eingestellt.

Bei einem tatsächlichen Wert $\ddot{u}_{1(35)} = 0,110444$
ergibt sich rechnerisch $\ddot{u}_2 = 0,09939$.

Dem kommt die Stufe 28 des zweiten Stufentransformators mit

$$\ddot{u}'_{2(28)} = 0,9924$$

am nächsten.

Der daraus erechnete Gleichstrom für die 35. bzw. 28. Stufe ergibt sich zu

$$I_{d1} = \frac{0,2940}{1,559 \cdot 0,11044 \cdot \sqrt{0,0835^2 + 0,9954^2}} = 1,7094 \ kA$$

$$I_{d2} = \frac{0,2646}{1,559 \cdot 0,09924 \cdot \sqrt{0,1060^2 + 0,9933^2}} = 1,7121 \ kA$$

$$\underline{\underline{I_{dmin}}} = \frac{I_{d1} + I_{d2}}{2} \qquad\qquad (9)$$

ergibt sich somit $I_{dmin} = 1,7107$ kA als kleinstmöglicher Übertragungsstrom für die Erfüllung aller gestellten Netzbedingungen und Umrichterbedingungen.

Es können für minimale Abweichungen von den geforderten Daten beider Seiten auch andere Stufenzahlverhältnisse wie 34/27, 33/26 oder 32/25 benutzt werden, wobei $I_{dmin}$ einen zunehmend größeren Betrag aufweist. Es ist dabei zu beachten, daß der mit abnehmenden Stufen ansteigende Strom $I_{dmin}$ durch die Verminderung der Stufen zulässigerweise nur so ansteigen darf, daß er den vorgegebenen Nennwert $I_{dn}$ nicht überschreitet oder die Steuerwinkel $\alpha$, die Löschwinkel $\gamma$ und die Überlappungswinkel u ihre zulässigen Grenzen einhalten.

Für den einwandfreien Betrieb der HGÜ unter Einhaltung der gestellten Bedingungen ist vorauszusetzen, daß $I_{dmin}$ in Verbindung mit dem zulässigen Schaltstufenverhältnis fließen kann, wobei kleinere Abweichungen der Sollwerte für die Wirk- und Blindleistung gegebenenfalls mit dem Steuer- bzw. Löschwinkel korrigierbar sind.

Das Regelverfahren nach der Erfindung kann sowohl analog als auch digital ablaufen und erlaubt wie dargelegt die Bestimmung des optimalen Betriebspunktes für stationäre Betriebsfälle sowie des Betriebspunktes mit geringster Abweichung von den Sollwerten für beide Netze bei dynamischen Vorgängen in den Netzen.

Für den Fall, daß keine Blindleistungsregelung erfolgen soll, kann die Ermittlung des Betriebspunktes mit kleinstmöglichen Strom $I_{dmin}$ (d.h. geringsten Verlusten) ergeben, daß dieser auch außerhalb des besagten Bereiches liegen kann.

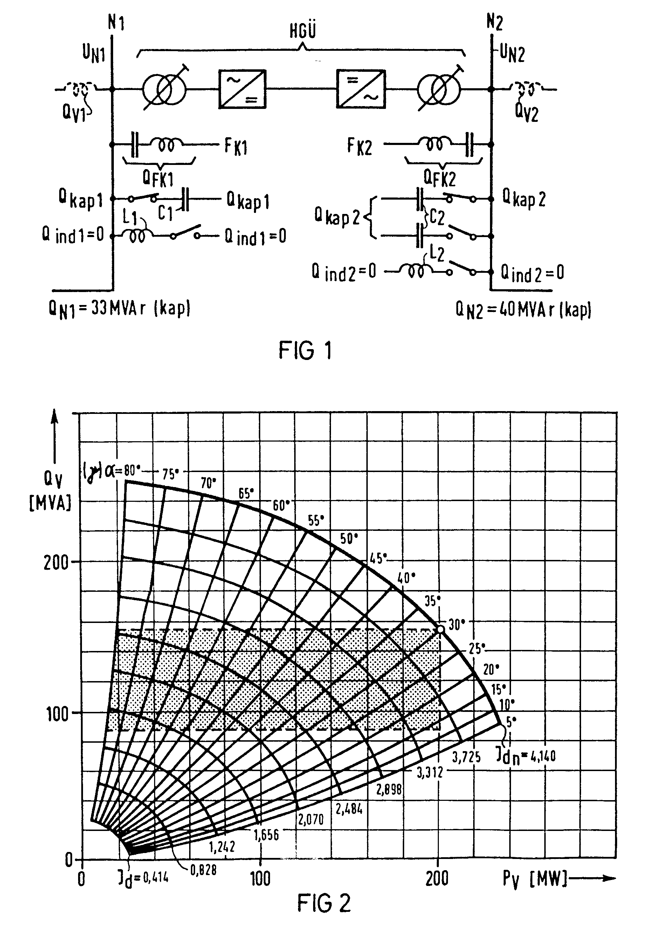

Eine Anwendung der Erfindung ist auf nachfolgend beschriebene Weise nicht nur für zwei vorgegebene, durch die HGÜ gekuppelte Netze N1 und N2 nach Fig. 1 möglich, sondern auch für die Zusammenarbeit von Netzen, von denen zumindest das eine Netz verschiedene Ausbaustufen erhalten kann und dabei die Forderung erfüllt werden soll, daß die Stufentransformatoren für die Umrichter, die Blindleistungsregelung für die HGÜ und die ermittelten Kompensationsmittel in Form von Drosseln und Kondensatoren für alle Netzkonfigurationen ausreichen.

EP 0 216 048 B1

Als Beispiel soll das Netz N1 unverändert bleiben und das Netz N2 stufenweise zum Netz N2a und endlich in einer weiteren Stufe zum Netz N2b ausgebaut werden.

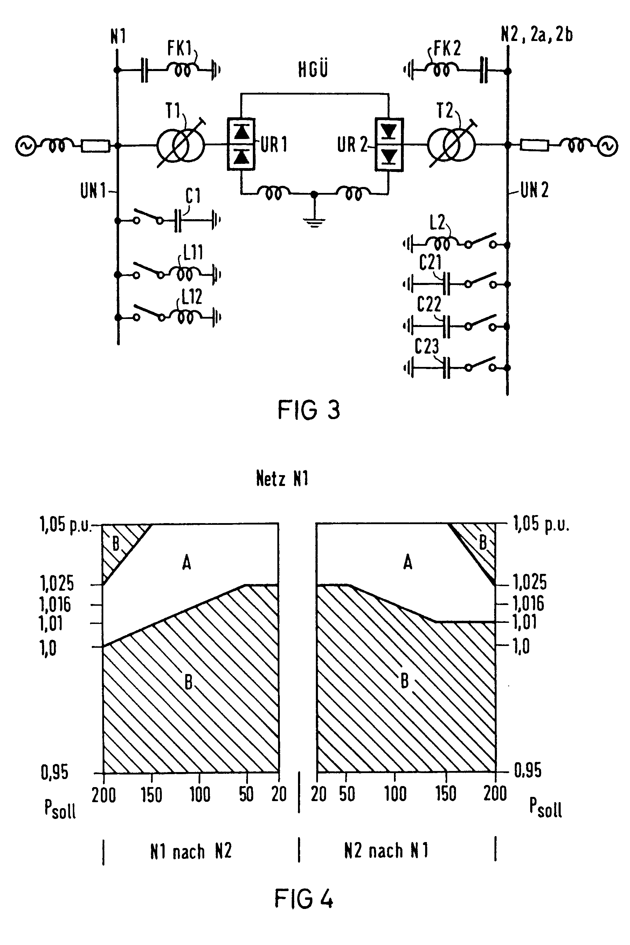

Jedes Netz ist wie in Fig. 1 gemäß Fig. 3 fest mit einem gleichbleibenden Filterkreis FK1 und FK2 für die Beseitigung von Oberschwingungen verbunden.

Vom Betreiber werden für jedes der Netze N1, N2, N2a und N2b für die Wirkleistungen $P_{soll}$ und $P_n$ und die beiden Energierichtungen für stationären Betrieb zugelassene Netzspannungsgrenzen als Spannungsfenster A und nur für dynamische Vorgänge erlaubte Bereiche B entsprechend Fig. 4 sowie die zugehörigen Netzblindleistungen $Q_N$ entsprechend den Tabellen Ia bis IVa vorgegeben. Aus diesen Tabellen Ia bis IVa können für günstige und ungünstige Netzbedingungen maximale und minimale, induktive bzw. kapazitive Netzblindleistungswerte entnommen werden.

Außerdem können aus der Summe der für die jeweils höchstzulässige Spannung des Fensters A für die einzelnen Wirkleistungen $P_{soll}$, $P_n$, geteilt durch die Zahl der Wirkleistungsstufen je Energierichtung je Netz, die Mittelwerte für induktive bzw. kapazitive Netzblindleistung (unter Beachtung der Minusvorzeichen für induktive Werte) errechnet werden und für die Netze N2, N2a, N2b summiert und durch drei geteilt werden.

Die jeweiligen Werte für $Q_{NLmax}$, $Q_{NCmax}$; $Q_{NLmittel}$ und $Q_{NCmittel}$ (für die Netze N2, N2a, N2b gemeinsam) sind in den Tabellen Ia bis IVa eingetragen.

In den Tabellen Ib,c bis IVb,c sind jeweils für die verschiedenen Netze und Energierichtungen in der HGÜ größte und kleinste Werte der Umrichterblindleistungen $Q_V$ bei günstigen und ungünstigen Netzbedingungen eingetragen, die in weiter unten angegebener Weise berechnet werden.

Bei günstigen Netzbedingungen werden die minimalen Werte $Q_V$ mit der jeweils höchstzulässigen Sammelschienenspannung für die jeweilige Wirkleistung $P_{soll}$, dem zugehörigen Netzblindleistungsbedarf $Q_N$ und allen induktiven Kompensationsmitteln L berechnet. In diesem Fall wird die Wirkung der Drosseln vom jeweiligen Netz unterstützt.

Die maximalen Werte $Q_V$ werden dagegen mit der minimal zulässigen Sammelschienenspannung für die betreffende Wirkleistung $P_{soll}$ ($P_n$), dem zugehörigen Netzblindleistungsbedarf $Q_N$ und allen kapazitiven Kompensationsmitteln ermittelt.

Bei ungüstigen Netzbedingungen wird die innere obere Grenze von $Q_{Voben}$ jedes Netzes mit der jeweils maximal zulässigen Sammelschienenspannung bei entsprechender Wirkleistung $P_{soll}$, den zugehörigen $Q_N$ und allen zugeordneten kapazitiven Kompensationsmitteln berechnet.

Die innere untere Grenze $Q_{Vunten}$ jedes Netzes wird mit der jeweils minimal zulässigen Sammelschienenspannung (Fenster A) für die betreffende Wirkleistung $P_{soll}$, dem zugehörigen $Q_N$ und allen vorhandenen induktiven Kompensationsmitteln berechnet.

Der Netzblindleistungsbedarf $Q_N$ muß von den Kondensatoren sowie den Filterkreisen FK soweit gedeckt werden, daß $Q_V$ innerhalb des Betriebsbereiches liegt.

Zur Feststellung des erforderlichen minimalen und maximalen Übersetzungsverhältnisses ü der Stufentransformatoren T1, T2, bzw. zur Überprüfung vorgegebener Stufentransformatoren auf ihre Anwendbarkeit (Tabelle XII) wird von der Beziehung

$$\ddot{u}_{max} = \frac{\pi \cdot U_{dn}}{3 \sqrt{2} \, U_{Nmin} \left( \cos \alpha_n - \frac{1}{2} U_{Kn} \right)} \qquad (10)$$

sowie

$$\ddot{u}_{min} = \frac{\pi \cdot U_{dn}}{3 \sqrt{2} \, U_{Nmax} \left( \cos \gamma_{min} - \frac{1}{2} U_{Kn} \right)} \qquad (11)$$

mit $U_{Nmin} = U_{Nn} \cdot 0{,}85$ und $U_{Nmax} = U_{Nn} \cdot 1{,}05$
(worin 0,85 ein unterhalb der Betreiberdaten liegender Wert ist) ausgegangen.

Die primärseitigen Ströme der Stufentransformatoren ergeben sich zu

7

EP 0 216 048 B1

$$S_{iVmin} = \frac{P_n}{\sqrt{3} \; U_N \cdot \cos \gamma_{min}} \qquad (12)$$

$$S_{iVn} = \frac{P_n}{\sqrt{3} \; U_N \cdot \cos \alpha_n} \qquad (13)$$

Daraus lassen sich die erforderlichen Umrichterblindleistungen

$$Q_{Vmin} = \sqrt{3} \cdot U_{Nn} \cdot S_{iVmin} \cdot \sin \gamma_{min} \qquad (14)$$

$$Q_{Vn} = \sqrt{3} \; U_{Nn} \cdot S_{iVn} \cdot \sin \alpha_n \qquad (15)$$

und aus der Differenz

$$Q_{Vn} - Q_{Vmin} = \Delta Q_V \qquad (16)$$

der Blindleistungshub $\Delta Q_V$ der Stufentransformatoren ermitteln.

Der Netzblindleistungsbedarf der jeweils zusammenarbeitenden beiden Netze muß soweit kompensiert werden, daß die Umrichterblindleistungen innerhalb des Betriebsbereiches liegen, d.h. daß ihre Differenz kleiner als $\Delta Q_V$ ist. Durch entsprechende Kombination der Stufen der beiden Stufentransformatoren kann dann ein gegenseitiges Annähern der Umrichterblindleistungen erfolgen.

Die Übertragung kleinster Umrichtergleichströme $I_d$ unddamit die Minimierung der Übertragungsverluste der HGÜ wird erreicht, wenn die Umrichterblindleistungen beider Umrichter UR1, UR2 an der unteren Grenze des jeweiligen Betriebsbereichs liegen. Die Schaltgrenzen der Kompensationsmittel sind bestimmt zu

$$Q_{Vn} \pm \tfrac{1}{2} \Delta Q_V \qquad (17)$$

worin

$$Q_{Vn} = Q_{Vref}$$

und bilden für die verwendeten Stufentransformatoren und die vorgegebenen Spannungsfenster A den anzustrebenden Betriebsbereich.

Bei Stufentransformatoren mit einer

| | |
|---|---|
| Kurzschlußspannung | $U_{Kn} = 0{,}17$ |
| Umrichter-Nenngleichspannung | $U_{dn} = 24{,}4 \text{ kV}$ |
| Steuerwinkel | $\alpha_n = 30°$ |
| Löschwinkel | $\gamma_{min} = 18°$ |
| ergeben sich | $Q_{Vmin} = 65 \text{ MVAr}$ |
| | $Q_{Vn} = 115 \text{ MVAr} = Q_{Vref}$ |
| | $\Delta Q_V = 50 \text{ MVAr}$ |

und daraus die Schaltgrenzen 90 bis 140 MVAr.

Aus einem Vergleich der Werte $Q_{NLmax}$ und $Q_{NCmax}$ sowie $Q_{NLmittel}$, $Q_{NCmittel}$ für Netz N1 aus Tabelle Ia und entsprechende Werte für Netz N2b aus Tabelle IVa mit $Q_V$ bieten sich für das Netz N1 und N2, N2a, N2b die nachfolgenden Kompensationsmitteleinheiten an.

Für Netz N1 gilt:

$$Q_{NLmax} + Q_{FK} - Q_{ref} = Q_{indmax} = 69 \text{ (L) MVAr}$$
$$Q_{NCmax} - Q_{FK} + Q_{ref} = Q_{kapmax} = 69 \text{ (C) MVAr}$$
$$Q_{NLmittel} + Q_{FK} - Q_{ref} = Q_{indmittel} = 42{,}6 \text{ (L) MVAr}$$
$$Q_{NCmittel} - Q_{FK} + Q_{ref} = Q_{kapmittel} = 37{,}6 \text{ (C) MVAr}$$

Für Netz N1 reichen somit $Q_L = 70$ MVAr und $Q_C = 35$ MVAr aus, wobei $Q_L$ in zwei Einzelheiten je 35 MVAr unterteilt wird, damit sie kleiner als $\Delta Q_V = 50$ MVAr ist.

8

Eine entsprechende Überlegung für Netze N2, N2a, N2b ergeben drei Kondensatoren mit je 35 MVAr sowie eine Drossel mit 35 MVAr, d.h. für beide Netze N1 und N2 (N2a, N2b) gilt:

$C_1$ = 35 MVAr, $L_{11}$ und $L_{12}$ je 35 MVAr;

$C_{21}$, $C_{22}$, $C_{23}$ je 35 MVAr und $L_2$ ebenfalls 35 MVAr.

Aus den besagten Größen $Q_{FK}$, $Q_N$, $Q_L$, $Q_C$ ergeben sich die in den Tabellen Ib,c bis IVb,c enthaltenen Werte $Q_V$ fürdie zugehörigen größten und kleinsten Spannungen der jeweiligen Fenster A nach der Gleichung

$$Q_V = Q_{FK} + Q_{NL} + Q_C - Q_L \qquad (18)$$

bzw.

$$Q_V = Q_{FK} - Q_{NC} + Q_C - Q_L \qquad (19)$$

und zwar bezogen auf die jeweiligen p.u. Spannungen.

Die errechneten Werte in Tabellen Ib,c bis IVb,c sind in den Tabellen V bis X so dargestellt, daß sich für die einzelnen Netze N1, N2; N2a, N2b gemeinsame Bereiche ergeben, aus denen gemäß Tabelle XI gemeinsame gültige Betriebsbereiche für alle Netze entnommen sind, die zeigen, daß ein erfindungsgemäß ermittelter gemeinsamer Betriebsbereich für die HGÜ mit Blindleistungsregelung unter Einhaltung einer ausreichenden Regelreserve bei Netzstörungen, dynamischen Vorgängen im Netz und schnellen Leistungsänderungen der Generatoren in den Netzen (Leistungsrampen) gewährleistet ist mit den verwendeten Stufentransformatoren und den gewählten Kompensationsmitteln.

Die in der vorgenannten Tabelle XI enthaltenen Werte zeigen, daß der Betriebsbereich von 90 bis 140 MVAr mit den ermittelten Kompensationsmitteln angefahren werden kann.

TABELLE I

Netz 1

| FENSTER A | | Energierichtung N1 nach N2 | | | | | | Energierichtung N2 nach N1 | | | | | |
|---|---|---|---|---|---|---|---|---|---|---|---|---|---|
| | | P (MW) | | | | | | P (MW) | | | | | |
| Spannung in p.u. | | 200 | 150 | 100 | 50 | 20 | 0 | 20 | 50 | 100 | 150 | 200 | |
| 1,05 | $Q_N$ | B | 59 C | 49 C | 42 C | 37 C | | 34 C | 33 C | 31 C | 29 C | B | a) |
| 1,025 | $Q_N$ | 1 C | | | 28 L | 31,5 L | | 35 L | 36 L | | | 39 L | |
| 1,016 | $Q_N$ | | | 51 L | B | B | | B | B | 66 L | | | |
| 1,01 | $Q_N$ | | 53 L | B | B | B | | B | B | B | 79 L | 79 L | |
| 1,0 | $Q_N$ | 68 L | B | B | B | B | | B | B | B | B | B | |

$$Q_{NLmax} = 79 \ \text{MVAr} \qquad Q_{NLmittel} = 52,6 \ \text{MVAr}$$
$$Q_{NCmax} = 59 \ \text{MVAr} \qquad Q_{NCmittel} = 27,6 \ \text{MVAr}$$

| | | | | | | | | | | | | | |
|---|---|---|---|---|---|---|---|---|---|---|---|---|---|
| 1,05 | $Q_V$ | B | 95,4 | 105,4 | 112,4 | 117,4 | | 120,4 | 121,4 | 123,4 | 125,4 | | b) |
| 1,025 | $Q_V$ | 146,1 | | | 175,1 | 178,6 | | 182,1 | 183,1 | | | 186,1 | |
| 1,016 | $Q_V$ | | | 195,5 | B | B | | B | B | 210,5 | | | |
| 1,01 | $Q_V$ | | 195,8 | B | B | B | | B | B | B | 221,8 | 221,8 | |
| 1,0 | $Q_V$ | 208,0 | B | B | B | B | | B | B | B | B | B | |
| 1,05 | $Q_V$ | B | -20,4 | -10,4 | - 3,4 | 1,6 | | 4,6 | 5,6 | 7,6 | 9,6 | B | c) |
| 1,025 | $Q_V$ | 35,8 | | | 64,8 | 68,3 | | 71,8 | 72,8 | | | 75,8 | |
| 1,016 | $Q_V$ | | | 87,13 | B | B | | B | B | 102,1 | | | |
| 1,01 | $Q_V$ | | 88,7 | B | B | B | | B | B | B | 114,7 | 114,7 | |
| 1,0 | $Q_V$ | 103,0 | B | B | B | B | | B | B | B | B | B | |

T A B E L L E   II

Netz N2

| FENSTER A | | Energierichtung N1 nach N2 | | | | | | Energierichtung N2 nach N1 | | | | | |
|---|---|---|---|---|---|---|---|---|---|---|---|---|---|
| | | P (MW) | | | | | | P (MW) | | | | | |
| Spannung in p.u. | | 200 | 150 | 100 | 50 | 20 | 0 | 20 | 50 | 100 | 150 | 200 | |
| 1,05 | $Q_N$ | 51 C | 54 C | 57 C | 65 C | 71 C | | 77 C | 87 C | 100 C | 118 C | B | a) |
| 1,025 | $Q_N$ | 22 C | 25 C | 27 C | 34 C | 40 C | | 46 C | 55 C | 68 C | 85 C | 103 C | |
| 1,0 | $Q_N$ | 7 L | 5 L | 3 L | 4 C | 9 C | | 14 C | 24 C | 36 C | 54 C | 71 C | |

$Q_{NLmax}$ = 7 MVAr
$Q_{NCmax}$ = 118 MVAr

| | | | | | | | | | | | | | |
|---|---|---|---|---|---|---|---|---|---|---|---|---|---|
| 1,05 | $Q_V$ | 180,5 | 177,5 | 174,5 | 166,5 | 160,5 | | 154,5 | 144,5 | 131,5 | 113,5 | B | b) |
| 1,025 | $Q_V$ | 198,6 | 195,6 | 193,6 | 186,6 | 180,6 | | 174,6 | 165,6 | 152,6 | 135,6 | 117,6 | |
| 1,0 | $Q_V$ | 217,0 | 215,0 | 213,0 | 206,0 | 201,0 | | 196,0 | 186,0 | 174,0 | 156,0 | 139,0 | |
| 1,05 | $Q_V$ | 26,2 | 23,2 | 20,2 | 12,2 | 6,2 | | 0,2 | - 9,8 | -22,8 | -40,8 | B | c) |
| 1,025 | $Q_V$ | 51,5 | 48,5 | 46,5 | 39,5 | 33,5 | | 27,5 | 18,5 | 5,5 | -11,5 | -29,5 | |
| 1,0 | $Q_V$ | 77,0 | 75,0 | 73,0 | 66,0 | 61,0 | | 56,0 | 46,0 | 34,0 | 16,0 | - 1,0 | |

T A B E L L E    III

Netz N2a

| FENSTER A | | Energierichtung N1 nach N2a | | | | | | Energierichtung N2a nach N1 | | | | | |
| | | P (MW) | | | | | 0 | P (MW) | | | | | |
| Spannung in p.u. | | 200 | 150 | 100 | 50 | 20 | | 20 | 50 | 100 | 150 | 200 | |
| 1,05 | $Q_N$ | 9 C | 12 C | 17 C | 24 C | 28 C | | 33 C | 39 C | 50 C | ·B | B | a) |
| 1,025 | $Q_N$ | 36 L | 33 L | 28 L | 22 L | 18 L | | 12 L | 6 L | 5 C | 17 C | 30 C | |
| 1,0 | $Q_N$ | 80 L | 77 L | 73 L | 68 L | B | | B | 51 L | 40 L | 28 L | 15 L | |

$$Q_{NLmax} = 80 \quad MVAr$$
$$Q_{NCmax} = 50 \quad MVAr$$

| | | | | | | | | | | | | | |
| 1,05 | $Q_V$ | 222,5 | 219,5 | 214,5 | 207,5 | 203,5 | | 198,5 | 192,5 | 181,5 | B | B | b) |
| 1,025 | $Q_V$ | 256,6 | 253,6 | 248,6 | 242,6 | 238,6 | | 232,6 | 226,6 | 215,6 | 203,6 | 190,6 | |
| 1,0 | $Q_V$ | 290,0 | 287,0 | 283,0 | 278,0 | B | | B | 261,0 | 250,0 | 238,0 | 225,0 | |
| 1,05 | $Q_V$ | 68,2 | 65,2 | 60,2 | 53,2 | 49,2 | | 44,2 | 38,2 | 27,2 | B | B | c) |
| 1,025 | $Q_V$ | 109,5 | 106,5 | 101,5 | 95,5 | 91,5 | | 85,5 | 79,5 | 68,5 | 56,5 | 43,5 | |
| 1,0 | $Q_V$ | 150,0 | 147,0 | 143,0 | 138,0 | B | | B | 121,0 | 110,0 | 98,0 | 85,0 | |

T A B E L L E    IV

Netz N2b

| FENSTER A Spannung in p.u. | | Energierichtung N1 nach N2b P (MW) | | | | | | Energierichtung N2b nach N1 P (MW) | | | | | |
|---|---|---|---|---|---|---|---|---|---|---|---|---|---|
| | | 200 | 150 | 100 | 50 | 20 | 0 | 20 | 50 | 100 | 150 | 200 | |
| 1,05 | $Q_N$ | 60 C | 63 C | 68 C | 74 C | 80 C | | 84 C | 92 C | 104 C | B | B | a) |
| 1,025 | $Q_N$ | 12 C | 15 C | 19 C | 25 C | 30 C | | 35 C | 42 C | 54 C | 67 C | 81 C | |
| 1,0 | $Q_N$ | 36 L | 33 L | 30 L | 25 L | B | | B | 8 L | 3 C | 15 C | 29 C | |

$$Q_{NLmax} = 36 \ \text{MVAr} \qquad Q_{NLmittel} = 9,5 \ \text{MVAr}$$
$$Q_{NCmax} = 104 \ \text{MVAr} \qquad Q_{NCmittel} = 60,5 \ \text{MVAr}$$
für alle Netze N2, N2a, N2b gemeinsam

| FENSTER A | | | | | | | | | | | | | |
|---|---|---|---|---|---|---|---|---|---|---|---|---|---|
| 1,05 | $Q_V$ | 171,5 | 168,5 | 163,5 | 157,5 | 151,5 | | 147,5 | 139,5 | 127,5 | B | B | b) |
| 1,025 | $Q_V$ | 208,6 | 205,6 | 201,6 | 195,6 | 190,6 | | 185,6 | 178,6 | 166,6 | 153,6 | 139,6 | |
| 1,0 | $Q_V$ | 246,0 | 243,0 | 240,0 | 235,0 | B | | B | 218,0 | 207,0 | 195,0 | 181,0 | |
| 1,05 | $Q_V$ | 17,2 | 14,2 | 9,2 | 3,2 | - 2,8 | | - 6,8 | -14,8 | -26,8 | B | B | c) |
| 1,025 | $Q_V$ | 61,5 | 58,5 | 54,5 | 48,5 | 43,5 | | 38,5 | 31,5 | 19,5 | 6,5 | - 7,5 | |
| 1,0 | $Q_V$ | 108,0 | 103,0 | 100,0 | 95,0 | B | | B | 78,0 | 67,0 | 55,0 | 41,0 | |

T A B E L L E    V

Energierichtung  N1 nach N2

| | | N1 | N2 | gemeinsamer Bereich bei | |
|---|---|---|---|---|---|
| | | | | ungünstigen Netzbedingungen | günstigen Netzbedingungen |
| 200 MW | $Q_{Vmax}$ | 208,0 | 217,0 | | |
| | $Q_{Voben}$ | 146,1 | 180,5 | 103,0 - 146,1 | 35,8 - 208,0 |
| | $Q_{Vunten}$ | 103,0 | 77,0 | | |
| $P_n$ | $Q_{Vmin}$ | 35,8 | 26,2 | | |
| 150 MW | $Q_{Vmax}$ | 195,8 | 215,0 | | |
| | $Q_{Voben}$ | 95,4 | 177,5 | 88,7 -  95,4 | 23,2 - 195,8 |
| | $Q_{Vunten}$ | 88,7 | 75,0 | | |
| $P_{soll}$ | $Q_{Vmin}$ | -20,4 | 23,2 | | |
| 100 MW | $Q_{Vmax}$ | 195,5 | 213,0 | | |
| | $Q_{Voben}$ | 105,4 | 174,5 | 87,1 - 105,4 | 20,2 - 195,5 |
| | $Q_{Vunten}$ | 87,1 | 73,0 | | |
| $P_{soll}$ | $Q_{min}$ | -10,4 | 20,2 | | |
| 50 MW | $Q_{Vmax}$ | 175,1 | 206,0 | | |
| | $Q_{Voben}$ | 112,4 | 166,5 | 66,0 - 112,4 | 12,2 - 175,1 |
| | $Q_{Vunten}$ | 64,8 | 66,0 | | |
| $P_{soll}$ | $Q_{Vmin}$ | - 3,4 | 12,2 | | |
| 20 MW | $Q_{Vmax}$ | 178,6 | 201,0 | | |
| | $Q_{Voben}$ | 117,4 | 160,5 | 68,3 - 117,4 | 6,2 - 178,6 |
| | $Q_{Vunten}$ | 68,3 | 61,0 | | |
| $P_{soll}$ | $Q_{Vmin}$ | 1,6 | 6,2 | | |

## T A B E L L E   VI

### Energierichtung   N2 nach N1

| | | N1 | N2 | gemeinsamer Bereich bei ungünstigen Netzbedingungen | günstigen Netzbedingungen |
|---|---|---|---|---|---|
| 200 MW | $Q_{Vmax}$ | 221,8 | 139,0 | | |
| | $Q_{Voben}$ | 186,1 | 117,6 | 114,7 - 117,6 | 75,8 - 139,0 |
| | $Q_{Vunten}$ | 114,7 | - 1,0 | | |
| $P_n$ | $Q_{Vmin}$ | 75,8 | -29,5 | | |
| 150 MW | $Q_{Vmax}$ | 221,8 | 156,0 | | |
| | $Q_{Voben}$ | 125,4 | 113,5 | 113,5 - 114,7 | 9,6 - 156,0 |
| | $Q_{Vunten}$ | 114,7 | 16,0 | | |
| $P_{soll}$ | $Q_{Vmin}$ | 9,6 | -40,8 | | |
| 100 MW | $Q_{Vmax}$ | 210,5 | 174,0 | | |
| | $Q_{Voben}$ | 123,4 | 131,5 | 102,1 - 123,4 | 7,6 - 174,0 |
| | $Q_{Vunten}$ | 102,1 | 34,0 | | |
| $P_{soll}$ | $Q_{min}$ | 7,6 | -22,8 | | |
| 50 MW | $Q_{Vmax}$ | 183,1 | 186,0 | | |
| | $Q_{Voben}$ | 121,4 | 144,5 | 72,8 - 121,4 | 5,6 - 183,1 |
| | $Q_{Vunten}$ | 72,8 | 46,0 | | |
| $P_{soll}$ | $Q_{Vmin}$ | 5,6 | - 9,8 | | |
| 20 MW | $Q_{Vmax}$ | 182,1 | 196,0 | | |
| | $Q_{Voben}$ | 120,4 | 154,5 | 71,8 - 120,4 | 4,6 - 182,1 |
| | $Q_{Vunten}$ | 71,8 | 56,0 | | |
| $P_{soll}$ | $Q_{Vmin}$ | 4,6 | 0,2 | | |

T A B E L L E   VII

Energierichtung  N1 nach N2a

| | | N1 | N2a | gemeinsamer Bereich bei ungünstigen Netzbedingungen | günstigen Netzbedingungen |
|---|---|---|---|---|---|
| 200 MW | $Q_{Vmax}$ | 208,0 | 290,0 | | |
| | $Q_{Voben}$ | 146,1 | 222,5 | 146,1 - 150,0 | 68,2 - 208,0 |
| | $Q_{Vunten}$ | 103,0 | 150,0 | | |
| $P_n$ | $Q_{Vmin}$ | 35,8 | 68,2 | | |
| 150 MW | $Q_{Vmax}$ | 195,8 | 287,0 | | |
| | $Q_{Voben}$ | 95,4 | 219,5 | 95,4 - 147,0 | 65,2 - 195,8 |
| | $Q_{Vunten}$ | 88,7 | 147,0 | | |
| $P_{soll}$ | $Q_{Vmin}$ | -20,4 | 65,2 | | |
| 100 MW | $Q_{Vmax}$ | 195,5 | 283,0 | | |
| | $Q_{Voben}$ | 105,4 | 214,7 | 105,4 - 143,0 | 60,2 - 195,5 |
| | $Q_{Vunten}$ | 87,1 | 143,0 | | |
| $P_{soll}$ | $Q_{min}$ | -10,4 | 60,2 | | |
| 50 MW | $Q_{Vmax}$ | 175,1 | 278,0 | | |
| | $Q_{Voben}$ | 112,4 | 207,5 | 112,4 - 138,0 | 53,2 - 175,1 |
| | $Q_{Vunten}$ | 64,8 | 138,0 | | |
| $P_{soll}$ | $Q_{Vmin}$ | - 3,4 | 53,2 | | |
| 20 MW | $Q_{Vmax}$ | 178,6 | 238,6 | | |
| | $Q_{Voben}$ | 117,4 | 203,5 | 91,5 - 117,4 | 49,2 - 178,6 |
| | $Q_{Vunten}$ | 68,3 | 91,5 | | |
| $P_{soll}$ | $Q_{Vmin}$ | 1,6 | 49,2 | | |

T A B E L L E   VIII

Energierichtung   N2a nach N1

| | | N1 | N2a | gemeinsamer Bereich bei | |
|---|---|---|---|---|---|
| | | | | ungünstigen Netzbedingungen | günstigen Netzbedingungen |
| 200 MW | $Q_{Vmax}$ | 221,8 | 225,0 | | |
| | $Q_{Voben}$ | 186,1 | 190,6 | 114,7 - 186,1 | 75,8 - 221,8 |
| | $Q_{Vunten}$ | 114,7 | 85,0 | | |
| $P_n$ | $Q_{Vmin}$ | 75,8 | 43,5 | | |
| 150 MW | $Q_{Vmax}$ | 221,8 | 238,0 | | |
| | $Q_{Voben}$ | 125,4 | 203,6 | 114,7 - 125,4 | 56,5 - 221,8 |
| | $Q_{Vunten}$ | 114,7 | 98,0 | | |
| $P_{soll}$ | $Q_{Vmin}$ | 9,6 | 56,5 | | |
| 100 MW | $Q_{Vmax}$ | 210,5 | 250,0 | | |
| | $Q_{Voben}$ | 123,4 | 181,5 | 110,0 - 123,4 | 27,2 - 210,5 |
| | $Q_{Vunten}$ | 102,1 | 110,0 | | |
| $P_{soll}$ | $Q_{min}$ | 7,6 | 27,2 | | |
| 50 MW | $Q_{Vmax}$ | 183,1 | 261,0 | | |
| | $Q_{Voben}$ | 121,4 | 192,5 | 121,0 - 121,4 | 38,2 - 183,1 |
| | $Q_{Vunten}$ | 72,8 | 121,0 | | |
| $P_{soll}$ | $Q_{Vmin}$ | 5,6 | 38,2 | | |
| 20 MW | $Q_{Vmax}$ | 182,1 | 232,6 | | |
| | $Q_{Voben}$ | 120,4 | 198,5 | 85,5 - 120,4 | 44,2 - 182,1 |
| | $Q_{Vunten}$ | 71,8 | 85,5 | | |
| $P_{soll}$ | $Q_{Vmin}$ | 4,6 | 44,2 | | |

T A B E L L E     IX

Energierichtung   N1 nach N2b

| | | N1 | N2b | gemeinsamer Bereich bei | |
|---|---|---|---|---|---|
| | | | | ungünstigen Netzbedingungen | günstigen Netzbedingungen |
| 200 MW | $Q_{Vmax}$ | 208,0 | 246,0 | | |
| | $Q_{Voben}$ | 146,1 | 171,5 | 106,0 - 146,1 | 35,8 - 208,0 |
| $P_n$ | $Q_{Vunten}$ | 103,0 | 106,0 | | |
| | $Q_{Vmin}$ | 35,8 | 17,2 | | |
| 150 MW | $Q_{Vmax}$ | 195,8 | 243,0 | | |
| | $Q_{Voben}$ | 95,4 | 168,5 | 95,4 - 103,0 | 14,2 - 195,8 |
| $P_{soll}$ | $Q_{Vunten}$ | 88,7 | 103,0 | | |
| | $Q_{Vmin}$ | -20,4 | 14,2 | | |
| 100 MW | $Q_{Vmax}$ | 195,5 | 240,0 | | |
| | $Q_{Voben}$ | 105,4 | 163,5 | 100,0 - 105,4 | 9,2 - 195,5 |
| | $Q_{Vunten}$ | 87,1 | 100,0 | | |
| $P_{soll}$ | $Q_{min}$ | -10,4 | 9,2 | | |
| 50 MW | $Q_{Vmax}$ | 175,1 | 235,0 | | |
| | $Q_{Voben}$ | 112,4 | 157,5 | 95,0 - 112,4 | 3,2 - 175,1 |
| | $Q_{Vunten}$ | 64,8 | 95,0 | | |
| $P_{soll}$ | $Q_{Vmin}$ | - 3,4 | 3,2 | | |
| 20 MW | $Q_{Vmax}$ | 178,6 | 190,6 | | |
| | $Q_{Voben}$ | 117,4 | 151,5 | 68,3 - 117,4 | 1,6 - 178,6 |
| | $Q_{Vunten}$ | 68,3 | 43,5 | | |
| $P_{soll}$ | $Q_{Vmin}$ | 1,6 | - 2,8 | | |

T A B E L L E   X

Energierichtung   N2b nach N1

| | | N1 | N2b | gemeinsamer Bereich bei | |
| | | | | ungünstigen Netzbedingungen | günstigen Netzbedingungen |
|---|---|---|---|---|---|
| 200 MW | $Q_{Vmax}$ | 221,8 | 181,0 | | |
| | $Q_{Voben}$ | 186,1 | 139,6 | 114,7 - 139,6 | 75,8 - 181,0 |
| | $Q_{Vunten}$ | 114,7 | 41,0 | | |
| $P_n$ | $Q_{Vmin}$ | 75,8 | - 7,5 | | |
| 150 MW | $Q_{Vmax}$ | 221,8 | 195,0 | | |
| | $Q_{Voben}$ | 125,4 | 153,6 | 114,7 - 125,4 | 9,6 - 195,0 |
| | $Q_{Vunten}$ | 114,7 | 55,0 | | |
| $P_{soll}$ | $Q_{Vmin}$ | 9,6 | 6,5 | | |
| 100 MW | $Q_{Vmax}$ | 210,5 | 207,0 | | |
| | $Q_{Voben}$ | 123,4 | 127,5 | 102,1 - 123,4 | 7,6 - 207,0 |
| | $Q_{Vunten}$ | 102,1 | 67,0 | | |
| $P_{soll}$ | $Q_{min}$ | 7,6 | -26,8 | | |
| 50 MW | $Q_{Vmax}$ | 183,1 | 218,0 | | |
| | $Q_{Voben}$ | 121,4 | 139,5 | 78,0 - 121,4 | 5,6 - 218,0 |
| | $Q_{Vunten}$ | 72,8 | 78,0 | | |
| $P_{soll}$ | $Q_{Vmin}$ | 5,6 | -14,8 | | |
| 20 MW | $Q_{Vmax}$ | 182,1 | 185,6 | | |
| | $Q_{Voben}$ | 120,4 | 147,5 | 71,8 - 120,4 | 4,6 - 182,1 |
| | $Q_{Vunten}$ | 71,8 | 38,5 | | |
| $P_{soll}$ | $Q_{Vmin}$ | 4,6 | - 6,8 | | |

TABELLE XI

| Größte gemeinsame Betriebsbereiche der Umrichterblindleistungen aller Netze | | |
|---|---|---|
| | bei günstigen Netzbedingungen | bei ungünstigen Netzbedingungen |
| P = 200 MW | 75,8 bis 139,0 MVAr | 103,0 bis 139,0 MVAr |
| 150 MW | 65,2 bis 156,0 MVar | 88,7 bis 147,0 MVar |
| 100 MW | 60,2 bis 174,0 MVar | 87,1 bis 143,0 MVar |
| 50 MW | 53,2 bis 175,1 MVar | 66,0 bis 138,0 MVar |
| 20 MW | 49,2 bis 178,6 MVar | 68,3 bis 120,4 MVar |

TABELLE XII

| Daten der Stufentransformatoren der HGÜ | | | | |
|---|---|---|---|---|
| Spannungsgrenzen für die Sammelschienenspannung | | max. zulässige Stufe | Kurzschlußspannung $U_{Kn}$ | Übersetzungsverhältnis |
| von | bis | | | |
| kleiner bis | 209,29 kV | 35 | 0,1530 | 0,110449 $ü_{max}$ |
| 209,3 | 213,89 | 34 | 0,1550 | 0,108696 |
| 213,9 | 216,19 | 33 | 0,1560 | 0,106997 |
| 216,2 | 220,79 | 32 | 0,1580 | 0,105351 |
| 220,8 | 223,09 | 31 | 0,1590 | 0,103755 |
| 223,1 | 227,69 | 30 | 0,1600 | 0,102206 |
| 227,7 | 229,99 | 29 | 0,1610 | 0,100703 |
| 230,0 | 234,59 | 28 | 0,1620 | 0,099244 |
| 234,6 | 236,89 | 27 | 0,1630 | 0,097826 |
| 236,9 | 241,49 | 26 | 0,1650 | 0,096448 |
| 241,5 | 243,79 | 25 | 0,1660 | 0,095109 |
| 243,8 | 248,39 | 24 | 0,1670 | 0,093806 |
| 248,4 | 250,69 | 23 | 0,1690 | 0,092538 |
| 250,7 | bis größer | 22 | 0,1700 | 0,091304 Nennwert |
| | | 21 | 0,1720 | 0,090103 |
| | | 20 | 0,1730 | 0,088933 |
| | | 19 | 0,1740 | 0,087793 |
| | | 18 | 0,1720 | 0,086681 |
| | | 17 | 0,1730 | 0,085598 |
| | | 16 | 0,1740 | 0,08541 |
| | | 15 | 0,1760 | 0,083510 |
| | | 14 | 0,1770 | 0,082504 $ü_{min}$ |
| | | 13 | 0,1780 | 0,081522 |
| | | 12 | 0,1790 | 0,080563 |
| | | 11 | 0,1800 | 0,796626 |
| | | 10 | 0,1810 | 0,078711 |
| | | 9 | 0,1830 | 0,077816 |
| | | 8 | 0,1840 | 0,076942 |
| | | 7 | 0,1850 | 0,076087 |
| | | 6 | 0,1860 | 0,075251 |
| | | 5 | 0,1870 | 0,074433 |
| | | 4 | 0,1880 | 0,073633 |
| | | 3 | 0,1900 | 0,072849 |
| | | 2 | 0,1910 | 0,072082 |
| | | 1 | 0,1920 | 0,071332 |

**Patentansprüche**

1. Regelverfahren für eine zwei Drehstromnetze (N1,N2) verbindende Hochspannungsgleichstromübertragung mit Blindleistungsbeeinflussung von Umrichtern (UR1,UR2) und Drehstromnetzen (N1,N2) durch schaltbare Kompensationsmittel (C1...C23, L1... L12) und durch Stufenschalter schaltbare Stufentransformatoren (T1,T2) zur Spannungshaltung der Drehstromnetze (N1, N2), **dadurch gekennzeichnet,** daß eine gleichzeitige Wirk- und Blindleistungsregelung beider Drehstromnetze (N1,N2) vorgenommen wird mit Hilfe von Kombinationen aus festen und schaltbaren kapazitiven und/oder induktiven Kompensationsmitteln (C1...C23, L1...L12) unter Einbeziehung der Stufenschalter beider Transformatoren (T1,T2) für die Einstellung des optimalen Betriebspunktes bei maximal zulässiger Schaltstufe für die jeweilige Betriebsspannung des einen Transformators (T1,T2), wobei das Verhältnis der Primärströme der beiden Transformatoren (T1,T2) zu dem Übersetzungsverhältnis der maximal zulässigen Stufe des einen Transformators (T1,T2) zu einer passenden Stufe des anderen Transformators (T1,T2) entsprechend der Beziehung

$$\frac{\ddot{u}_2}{\ddot{u}_1} = \frac{S_{iV2}}{S_{iV1}} \cdot \sqrt{\frac{\rho_1^2 + \chi_1^2}{\rho_2^2 + \chi_2^2}}$$

gewählt ist,
unter Berücksichtigung der Abhängigkeit des jeweiligen Gleichstroms

$$I_d = \frac{S_{IV}}{\frac{3b}{\pi} \sqrt{\frac{2}{3}} \; \ddot{u} \cdot \sqrt{\rho^2 + \chi^2}}$$

im Sinne des Erhalts eines alle Netzbedingungen erfüllenden minimal zulässigen Übertragungsstromes $I_{dmin}$ gleich der halben Summe der Gleichströme der beiden Umrichter (UR1,UR2), worin bedeuten $\ddot{u}_1$, $\ddot{u}_2$ die Transformator-Übersetzunsverhältnisse, $S_{iV1}$, $S_{iV2}$ die Primärströme der Transformatoren (T1,T2), b die Zahl der in Reihe geschalteten Gleichrichterbrücken, $\rho_1$, $\rho_2$, $\chi_1$, $\chi_2$, $\epsilon_1$, $\epsilon_2$ von Steuerwinkeln $\alpha$, Löschwinkeln $\gamma$ und Überlappungswinkeln u abhängige Größen entsprechend den Gleichungen

$\epsilon = \frac{1}{2} [\cos \alpha - \cos (\alpha + u)]$,
$\rho = \frac{1}{2} [\cos \alpha + \cos (\alpha + u)]$, und

$$\chi = \frac{1}{2} \left[\sin \alpha + \sin (\alpha + u)\right] + \frac{u \frac{\pi}{180} - \sin u}{4 \epsilon}.$$

2. Regelverfahren nach Anspruch 1, **dadurch gekennzeichnet,** daß die Betriebspunkte für beide Drehstromnetze (N1,N2) innerhalb eines Bereiches liegen, der durch die Zahl der vorhandenen festen und schaltbaren Kompensationsmittel (C1...C23, L1...L12) und der Größe des jeweiligen Transformators (T1,T2) sowie von der Zahl und Größe seiner Schaltstufen sowie den spannungsabhängigen Blindleistungsforderungen der Drehstromnetze (N1,N2) bestimmt wird.

3. Regelverfahren nach Anspruch 1 oder 2, **dadurch gekennzeichnet,** daß zur Stützung eines Drehstromnetzes (N1 bzw. N2) der für die diesem Drehstromnetz zugeordneten Seite der HGÜ ermittelte Gleichstrom als Übertragungsstrom eingestellt wird.

4. Regelverfahren nach Anspruch 1, **dadurch gekennzeichnet,** daß die maximalen und minimalen Übersetzungsverhältnisse der Transformatoren (T1,T2) in Abhängigkeit von einer Nenngleichspannung $U_{dn}$ der Umrichter (UR1,UR2), einer Netzspannung $U_N$, einer Transformatorkurzschlußnennspannung

$U_{Kn}$ sowie den Nennsteuerwinkel $\alpha_n$ und den für Energietransport in beiden Richtungen maßgeblich minimalen Löschwinkel $\gamma_{min}$ entsprechend den Beziehungen

$$\ddot{u}_{max} = \frac{\pi \cdot U_{dn}}{3\sqrt{2} \cdot U_{Nmin} \; (\cos\alpha_n - \frac{1}{2} u_{Kn})}$$

bzw.

$$\ddot{u}_{min} = \frac{\pi \cdot U_{dn}}{3\sqrt{2} \cdot U_{Nmax} \; (\cos\gamma_{min} - \frac{1}{2} u_{Kn})}$$

ausgelegt werden.

**5.** Regelverahren nach Anspruch 2, **dadurch gekennzeichnet,** daß aus den Blindleistungen $Q_{Vn}$ gleich $Q_{Vref}$ der Umrichter (UR1,UR2) bei Nennsteuerwinkel $\alpha_n$ und $Q_{Vmin}$, bei Löschwinkel $\gamma_{min}$ ein Blindleistunghub $\Delta Q_V$, die Lage des Betriebsbereichs und die Schaltgrenzen der ausreichend bemessenen Kompensationsmittel (C1...C23, L1...L12) ermittelt werden und durch $Q_{ref} \pm \frac{1}{2} \Delta Q_V$ der Bereich festgelegt wird, in dem die Transformatoren (T1,T2) unter Einhaltung der betreiberseitig vorgegebenen Daten den Betriebspunkt mit dafür geringsten Verlusten und ausreichenden Regelreserven ansteuern.

**Claims**

**1.** Control method for a high-voltage direct-current transmission connecting two three-phase systems (N1,N2), with influencing of the reactive-power of converters (UR1,UR2) and three-phase systems (N1,N2) by means of switchable compensation means (C1...C23, L1...L12) and tapped transformers (T1,T2) switchable by means of tap changers for maintaining the voltage of the three-phase systems (N1,N2), characterized in that a simultaneous active and reactive power control of both three-phase systems (N1,N2) is undertaken with the aid of combinations of fixed and switchable capacitive and/or inductive compensation means (C1...C23, L1...L12) with the inclusion of the tap changers of both transformers (T1,T2) for setting the optimal operating point at a maximum permissible tap position for the respective operational voltage of the one transformer (T1,T2), whereby the ratio of the primary currents of the two transformers (T1,T2) to the transformation ratio of the maximum permissible position of the one transformer (T1,T2) to a suitable position of the other transformer (T1,T2) is chosen according to the equation

$$\frac{\ddot{u}_2}{\ddot{u}_1} = \frac{S_{iv2}}{S_{iv1}} \cdot \sqrt{\frac{S_1^2 + X_1^2}{S_2^2 + X_2^2}}$$

taking into consideration the function of the respective direct current

$$Id = \frac{S_{IV}}{\frac{3b}{\pi}\sqrt{\frac{2}{3}} \; \ddot{u} \cdot \sqrt{S^2 + X^2}}$$

in the sense of obtaining a minimum permissible transmission current $I_{dmin}$, fulfilling all system requirements, equal to half the sum of the direct currents of the two converters (UR1,UR2), wherein $\ddot{u}_1$, $\ddot{u}_2$ signify the transformer transformation ratios, $S_{iV1}$, $S_{iV2}$ the primary currents of the transformers (T1,T2), b the number of rectifier bridges connected in series, $\rho_1$, $\rho_2$, $\chi_1$, $\chi_2$, $\epsilon_1$, $\epsilon_2$ values dependent on control angles $\alpha$, extinction angles $\gamma$ and overlap angles u corresponding to the equations

$$\epsilon = \tfrac{1}{2}\left[\cos\alpha - \cos(\alpha + u)\right],$$
$$\rho = \tfrac{1}{2}\left[\cos\alpha + \cos(\alpha + u)\right], \text{ and}$$

$$\chi = \tfrac{1}{2}\ \left[\sin\alpha + \sin(\alpha + u)\right]\ +\ \frac{u\frac{\pi}{180} - \sin u}{4\,\epsilon}.$$

2. Control method according to claim 1, characterized in that the operating points for both three-phase systems (N1,N2) lie within a region which is determined by the number of existing fixed and switchable compensation means (C1...C23, L1...L12) and the size of the respective transformer (T1,T2) as well as by the number and size of its tap positions as well as the voltage-dependent reactive-power requirements of the three-phase systems (N1,N2).

3. Control method according to claim 1 or 2, characterized in that to support a three-phase system (N1 or N2) the direct current determined for the side of the HVDCT associated with this three-phase system is set as transmission current.

4. Control method according to claim 1, characterized in that the maximum and minimum transformation ratios of the transformers (T1,T2) are laid out as a function of a nominal direct voltage $U_{dn}$ of the converters (UR1,UR2), a system voltage $U_N$, a transformer short-circuit nominal voltage $U_{Kn}$ as well as the nominal control angle $\alpha_n$ and the standard minimal extinction angle $\gamma_{min}$ for power transmission in both directions, corresponding to the equations

$$\ddot{u}_{max} = \frac{\pi \cdot U_{dn}}{3\sqrt{2}\cdot U_{Nmin}\ (\cos\alpha_n - \tfrac{1}{2} u_{Kn})}$$

$$\ddot{u}_{min} = \frac{\pi \cdot U_{dn}}{3\sqrt{2}\cdot U_{Nmax}\ (\cos\gamma_{min} - \tfrac{1}{2} u_{Kn})}$$

5. Control method according to claim 2, characterized in that from the reactive powers $Q_{Vn}$ equal to $Q_{Vref}$ of the converters (UR1,UR2) with nominal control angle $\alpha_n$ and $Q_{Vmin}$, with extinction angle $\gamma min$ a reactive power range $\Delta Q_V$, the position of the operating region and the switching limits of the adequately dimensioned compensation means (C1...C23, L1...L12) are determined and by means of $Q_{ref} \pm \tfrac{1}{2}\Delta Q_V$ the region is established in which the transformers (T1,T2), while maintaining the data specified on the part of the operator, control the operating point with the smallest losses therefor and with adequate control reserves.

## Revendications

1. Procédé de régulation pour un système de transmission ou le transport à haute tension et en courant continu, qui relie deux réseaux triphasés (N1,N2), avec influence de la puissance réactive de convertisseurs statiques (UR1, UR2) et de réseaux triphasés (N1,N2) par des moyens de compensation commutables (C1...C23, L1...L12) et par des transformateurs à gradins (T1,T2), commutables au moyen de commutateurs à gradins et servant à maintenir la tension des réseaux triphasés (N1,N2), caractérisé par le fait que l'on procède à une régulation simultanée de la puissance active et de la puissance réactive des deux réseaux triphasés (N1,N2) à l'aide de combinaisons constituées de moyens fixes et commutables de compensation, capacitifs et/ou inductifs (C1...C23, L1...L12) en faisant intervenir les commutateurs à gradins des deux transformateurs (T1,T2) pour le réglage du point optimal de fonctionnement dans un étage admissible de commutation maximal pour respectivement la tension de service d'un premier destransformateur (T1,T2), le rapport entre les courants primaires des deux transformateurs (T1,T2) et rapport de transformation de l'étage maximal admissible dudit premier transformateur (T1,T2), étant choisi, à un étage adapté de l'autre transformateur (T1,T2) conformément à la relation

$$\frac{\ddot{u}_2}{\ddot{u}_1} = \frac{S_{iV2}}{S_{iv1}} \sqrt{\frac{\rho_1^2 + \chi_1^2}{\rho_2^2 + \chi_2^2}} \, ,$$

en tenant compte de la dépendance du courant continu

$$\text{respectif } I_d = \frac{S_{IV}}{\frac{3b}{\pi} \sqrt{\frac{2}{3}} - \ddot{u} \cdot \sqrt{\rho^2 + \chi^2}} \text{ dans le sens de}$$

l'obtention d'un courant de transmission minimal admissible $I_{dmin}$ qui satisfait à toutes les conditions du réseau et qui est égal à la moitié de la somme des courants continus des deux convertisseurs statiques (UR1,UR2), $\ddot{u}_1$, $\ddot{u}_2$ désignant les rapports de transformation des transformateurs, $S_{iV1}$, $S_{iV2}$ représentant les courants primaires des transformateurs (T1,T2), b le nombre des ponts redresseurs branchés en série, $\rho_1$, $\rho_2$, $\chi_1$, $\chi_2$, $\epsilon_1$, $\epsilon_2$ désignant des grandeurs qui dépendent d'angles de commande $\alpha$, d'angles d'extinction $\gamma$ et d'angles de chevauchement u, conformément aux relations

$$\epsilon = \tfrac{1}{2} [\cos \alpha - \cos (\alpha + u)],$$
$$\rho = \tfrac{1}{2} [\cos \alpha + \cos (\alpha + u)], \text{ et}$$

$$\chi = \frac{1}{2} [\sin \alpha + \sin (\alpha + u)] + \frac{u \frac{\pi}{180} - \sin u}{4\epsilon}.$$

**2.** Procédé de régulation suivant la revendication 1, caractérisé par le fait que les points de fonctionnement pour les deux réseaux triphasés (N1,N2) sont situés dans une plage qui est déterminée par le nombre des moyens fixes et commutables de compensation présents (C1...C23, L1...L12) et de la taille du transformateur concerné (T1,T2), ainsi que du nombre et de la taille de ses étages de commutation ainsi que des exigences, qui dépendent de la tension, du point de vue des puissances réactives, des réseaux triphasés (N1,N2).

**3.** Procédé de régulation suivant la revendication 1 ou 2, caractérisé par le fait que pour assister un réseau triphasé (N1 ou N2), on règle en tant que courant de transmission le courant continu, déterminé pour le côté associé à ce réseau triphasé, du système de transport à haute tension et en courant continu.

**4.** Procédé de régulation suivant la revendication 1, caractérisé par le fait que les rapports maximum et minimum de transmission des transformateurs (T1,T2) sont choisis en fonction d'une tension continue nominale $U_{dn}$ des convertisseurs statiques (UR1,UR2), d'une tension $U_N$ du réseau, d'une tension nominale $U_{Kn}$ de court-circuit du transformateur ainsi que de l'angle de commande nominal $\alpha_n$ et de l'angle minimum d'extinction $\gamma_{min}$ qui est déterminant pour le transport d'énergie dans les deux sens, conformément aux relations

$$\ddot{u}_{max} = \frac{\pi \cdot U_{dn}}{3 \sqrt{2} \cdot U_{Nmin} (\cos \alpha_n - \frac{1}{2} u_{Kn})} \quad et$$

$$\ddot{u}_{min} = \frac{\pi \cdot U_{dn}}{3 \sqrt{2} \cdot U_{Nmax} (\cos \gamma_{min} - \frac{1}{2} u_{Kn})} .$$

**5.** Procédé de régulation suivant la revendication 2, caractérisé par le fait qu'à partir des puissances réactives $Q_{Vn}$ égales à $Q_{Vref}$ des convertisseurs statiques (UR1,UR2), pour des angles de commande nominaux $\alpha_n$ et $Q_{Vmin}$, pour des angles d'extinction $\gamma_{min}$, on détermine l'excursion $\Delta Q_V$ de la puissance réactive, la position de la plage de fonctionnement et les limites de commutation des moyens de compensation (C1...C23, L1...L12) dimensionnés de façon suffisante au moyen, et par $Q_{ref} \pm \frac{1}{2} \Delta_{QV2}$ on fixe la plage dans laquelle les transformateurs (T1,T2) commandent le point de fonctionnement, avec des pertes aussi faibles que possible à cet effet et des réserves suffisantes de régulation, tout en respectant les données prédéterminées du côté exploitation.

FIG 1

FIG 2

FIG 3

Netz N1

FIG 4